# EUROPÄISCHE PATENTSCHRIFT

(11) **EP 0 678 555 B1**
(45) Veröffentlichungstag und Bekanntmachung des Hinweises auf die Patenterteilung: **01.07.1998**
(21) Anmeldenummer: 95105710.8
(22) Anmeldetag: 15.04.1995
(51) Int. Cl.: C08L 77/06, C08L 71/12, C08J 5/18

(54) **Polyphenylenether/Polyamid-Formmassen**
Polyphenylene-ether/polyamide molding compositions
Masses à mouler à base des poly(oxyphénylènes) et des polyamides

(30) Priorität: 22.04.1994 DE 4414044
(43) Veröffentlichungstag der Anmeldung: 25.10.1995
(73) Patentinhaber: BASF AKTIENGESELLSCHAFT, 67056 Ludwigshafen (DE)
(72) Erfinder: Gottschalk, Axel, Dr., D-67435 Neustadt (DE); Fisch, Herbert, Dr., D-67157 Wachenheim (DE); Pipper, Gunter, D-67098 Bad Dürkheim (DE); Weber, Martin, Dr., D-67433 Neustadt (DE)

(56) Entgegenhaltungen:
- EP-A- 0 335 506
- EP-A- 0 510 383
- EP-A- 0 523 445
- EP-A- 0 553 556

## Beschreibung

Die Erfindung betrifft thermoplastische Formmassen, enthaltend
A) 5 bis 95 Gew.-% eines teilaromatischen, teilkristallinen Copolyamids, aufgebaut im wesentlichen aus
   a₁) 32 bis 40 mol-% Einheiten, welche sich von Terephthalsäure ableiten
   a₂) 10 bis 18 mol-% Einheiten, welche sich von Isophthalsäure ableiten
   a₃) 43 bis 49,5 mol-% Einheiten, welche sich von Hexamethylendiamin ableiten
   a₄) 0,5 bis 7 mol-% Einheiten, welche sich von aliphatischen cyclischen Diaminen mit 6 bis 30 C-Atomen ableiten,
   wobei die Molprozente der Komponenten a₁) bis a₄) zusammen 100 % ergeben und
B) 5 bis 95 Gew.-% eines Polyphenylenethers
C) 0 bis 30 Gew.-% eines kautschukelastischen Polymerisates
D) 0 bis 45 Gew.-% eines faser- oder teilchenförmigen Füllstoffes oder deren Mischungen
E) 0 bis 20 Gew.-% eines Flammschutzmittels
F) 0 bis 30 Gew.-% Stabilisatoren, Oxidationsinhibitoren, Mittel gegen Wärmezersetzung und Zersetzung durch ultraviolettes Licht, Gleitmittel, Entformungsmittel, Farbstoffe, Pigmente oder Weichmacher,
wobei sich die Prozentzahlen A) bis F) zu 100 % ergänzen.

Außerdem betrifft die Erfindung die Verwendung dieser Formmassen zur Herstellung von Formkörpern jeglicher Art und die daraus erhältlichen Formkörper.

Formmassen aus Polyphenylenether (PPE) und Polyamid (PA) sind bekannt.

Aus der EP-A 232 363 sind Mischungen aus einem durch Umsetzen mit Maleinsäureanhydrid in der Schmelze modifizierten PPE, aliphatischen Polyamiden und einem Schlagzähmodifier bekannt. Die EP-A 400 418 offenbart Mischungen aus PPE/PA, welche ein speziell aufgebautes Ethylencopolymer als Schlagzähmodifier enthalten. Diese Produkte zeichnen sich zwar durch eine befriedigende Schlagzähigkeit aus, jedoch wäre eine Verbesserung der Wärmeformbeständigkeit und eine Verringerung der Schwindung wünschenswert.

EP-A- 335 506 offenbart Harzmassen umfassend ein PPE oder ein Gemisch von einem PPE und einem Polystyrol, mindestens ein aromatisches alicyclisches Copolyamid und mindestens eine Verbindung ausgewählt aus Oxazolin und Verbindungen mit (a) einer Kohlenstoff-Kohlenstoff Doppelbindung, oder einer Kohlenstoff-Kohlenstoff-Dreifachbindung und (b) mindestens einer funktionellen Gruppe, ausgewählt aus Carboxyl-, Säureanhydrid, Amino-, Säureamid, Imido-, Epoxy, Carbonsäureester-, Isocyanat-, Methylol-, Oxazolidin-und Hydroxylgruppen.

Mischungen aus modifiziertem PPE und einem teilaromatischen, teilkristallinen Polyamid bestimmter Zusammensetzung sind aus der EP-A 320 725 und EP-A 510 383 bekannt. In einigen Anwendungsbereichen wie z.B. Kraftfahrzeugformteilen wird eine hohe Zähigkeit bei guter Verarbeitbarkeit gefordert. Die Zähigkeit nach der Lehre der genannten Schriften erhaltenen Produkte ist dort nicht ausreichend.

Aufgabe der vorliegenden Erfindung war es daher, thermoplastische Formmassen aus Polyphenylenethern und Polyamid zu Verfügung zu stellen, die eine sehr gute Abriebfähigkeit und eine hohe Wärmeformbeständigkeit aufweisen, wobei die guten mechanischen Eigenschaften wie Zähigkeit (insbesondere multiaxiale Zähigkeit) und Steifigkeit erhalten bleiben.

Diese Aufgabe wird erfindungsgemäß durch die eingangs definierten thermoplastischen Formmassen gelöst. Bevorzugte Massen dieser Art sind den Unteransprüchen zu entnehmen.

Als Komponente A) enthalten die erfindungsgemäßen Formmassen ein teilaromatisches teilkristallines thermoplastisches Copolyamid in Mengen von 50 bis 95, vorzugsweise 15 bis 75 und insbesondere 25 bis 65 Gew.-% aufgebaut im wesentlichen aus
a₁) 32 bis 40 insbesondere 32 bis 38 mol-% Einheiten, welche sich von Terephthalsäure ableiten,
a₂) 10 bis 18 insbesondere 12 bis 18 mol-% Einheiten, welche sich von Isophthalsäure ableiten,
a₃) 43 bis 49,5, vorzugsweise 46 bis 48,5 und insbesondere 46,3 bis 48,2 mol-% Einheiten, welche sich von Hexamethylendiamin ableiten,
a₄) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,
wobei die Molprozente der Komponenten a₁) bis a₄) zusammen 100 % ergeben.

Die Diamineinheiten a₃) und a₄) werden vorzugsweise äquimolar mit den Dicarbonsäureeinheiten a₁) und a₂) umgesetzt.

Geeignete Monomere a₄) sind vorzugsweise cyclische Diamine der Formel 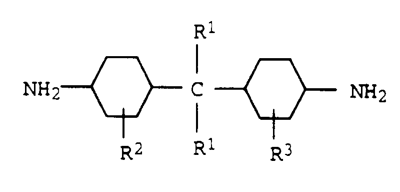 in der
- R¹: Wasserstoff oder eine C₁-C₄-Alkylgruppe,
- R²: eine C₁-C₄-Alkylgruppe oder Wasserstoff und
- R³: eine C₁-C₄-Alkylgruppe oder Wasserstoff bedeutet.

Besonders bevorzugte Diamine a₄) sind Bis(4-aminocyclohexyl)methan, Bis(4-amino-3-methylcyclohexyl)methan, Bis(4-aminocyclohexyl)-2,2-propan und Bis(4-amino-3-methylcyclohexyl)-2,2-propan.

Als weitere Monomere a₄) seien 1,3- und 1,4-Cyclohexandiamin und Isophorondiamin genannt.

Neben den vorstehend beschriebenen Einheiten a₁) bis a₄) können die teilaromatischen Copolyamide A) bis zu 4, vorzugsweise bis zu 3,5 Gew.-% (bezogen auf a₁) bis a₄) an weiteren polyamidbildenden Monomeren a₅) enthalten, wie sie von anderen Polyamiden bekannt sind.

Aromatische Dicarbonsäuren a₅) weisen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure und Phenoxyterephthalsäure.

Weitere polyamidbildende Monomere a₅) können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 290°C bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den teilaromatischen Copolyamide sollen erfindungsgemäß solche verstanden werden, die einen Kristallinitätsgrad > 30 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von ΔH_{krist.} bestimmt.

Selbstverständlich können auch Mischungen der teilaromatischen Copolyamide eingesetzt werden, wobei das Mischungsverhältnis beliebig ist.

Geeignete Verfahren zur Herstellung der erfindungsgemäßen Copolyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 bis 340°C erhitzt, wobei ein Druck von 10 bis 50, insbesondere 15 bis 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 bis 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129 195 und 129 196 beschriebenen Verfahren.

Gemäß diesen Verfahren wird eine wäßrige Lösung der Monomeren a₁) bis a₄) sowie gegebenenfalls a₅) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 bis 30 min. polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

In einer besonders bevorzugten Ausführungsform ist es auch möglich, die Komponenten B) sowie gegebenenfalls C) bis F) schon in den Entgasungsextruder zum Präpolymeren der Komponente A) zu geben, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Als Komponente B) enthalten die erfindungsgemäßen Formmassen 5 bis 95, bevorzugt 20 bis 80 und insbesondere 20 bis 60 Gew.-% eines Polyphenylenethers. Es können unmodifizierte Polyphenylenether oder modifizierte Polyphenylenether sowie Mischungen aus diesen verwendet werden. Bevorzugt sind modifizierte Polyphenylenether und Mischungen mit unmodifizierten Polyphenylenethern, die 55 bis 95 Gew.-% (bezogen auf B) eines modifizierten Polyphenylenethers enthalten.

Die Polyphenylenether weisen im allgemeinen ein Molekulargewicht (Gewichtsmittelwert) im Bereich von 10.000 bis 80.000, vorzugsweise von 20.000 bis 60.000, auf.

Dies entspricht einer reduzierten spezifischen Viskosität η_{red} von 0,2 bis 0,9 dl/g, vorzugsweise von 0,35 bis 0,8, gemessen in einer 1 gew.-%igen Lösung in Chloroform bei 25°C nach DIN 53 726.

Die unmodifizierten Polyphenylenether b₁) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polieren löslich sind (vgl. A. Noshay, Block Copolymers, S. 8 bis 10, Academic Press, 1977, und O. Olabisi, Polymer-Polymer Miscibility, 1979, S. 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-polyphenylenether), Poly(2-methoxi-6-ethoxi-1,4-phenylenether), Poly(2-ethyl-6-stearyloxy-1,4-phenylenether), Poly(2,6-dichlor-1,4-phenylenether), Poly(2-methyl-6-phenyl-1,4-phenylenether), Poly(2,6-dibenzyl-1,4-phenylen)ether, Poly(2-ethoxi-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Weiterhin sind Propfcopolymere aus Polyphenylenether und vinylaromatischen Monomeren wie Styrol, α-Methylstyrol, Vinyltoluol und Chlorstyrol geeignet.

Funktionalisierte oder modifizierte Polyphenylenether B) sind an sich bekannt, z.B. aus WO-A 86/02086, WO-A 87/00540, EP-A-22 245, EP-A-223 116 und EP-A-254 048.

Üblicherweise wird der Polyphenylenether b₁) durch Einbau mindestens einer Carbonyl-, Carbonsäure-, Säureanhydrid, Säureamid-, Säureimid, Carbonsäureester, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem 2. Polymeren der Mischung, dem Polyamid, gewährleistet ist.

Die Modifizierung wird im allgemeinen durch Umsetzung eines Polyphenylenethers b₁) mit einem Modifiziermittel, das mindestens eine der oben genannten Gruppen enthält, in Lösung (WO-A 86/2086), in wäßriger Dispersion, in einem Gasphasenverfahren (EP-A 25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel (b₃) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁- und C₂-C₈-Alkanolen (Monomere b₃₁), die Mono- oder Diamide dieser Säuren wie N-Phenylmaleinimid (Monomere b₃₂), Maleinhydrazid. Weitere Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere b₃₃) seien beispielsweise N-Vinylpyrrolidon und (Meth)acryloylcaprolactam genannt.

Bevorzugt wird in den erfindungsgemäßen Formmassen als Komponente B) ein modifizierter Polyphenylenether eingesetzt, der durch Umsetzen von
b₁) 50 bis 99,95 Gew.-% eines unmodifizierten Polyphenylenethers
b₂) 0 bis 40 Gew.-% eines vinylaromatischen Polymeren
b₃) 0,05 bis 30 Gew.-% mindestens einer Verbindung aus der Gruppe gebildet aus
   b₃₁) einer α,β-ungesättigten Dicarbonylverbindung,
   b₃₂) eines Amid-Gruppen enthaltenden Monomeren mit einer polymerisierbaren Doppelbindung und
   b₃₃) eines Lactam-Gruppen enthaltenden Monomeren mit einer polymerisierbaren Doppelbindung,
b₄) 0 bis 5 Gew.-% eines Radikalstarters
wobei sich die Gewichtsprozente auf die Summe von b₁) bis b₄) beziehen, im Verlaufe von 0,5 bis 15 Minuten bei 240 bis 375°C in geeigneten Misch- und Knetaggregaten wie Zweischneckenextrudern erhältlich ist.

Das vinylaromatische Polymer (b₂) soll vorzugsweise mit dem eingesetzten Polyphenylenether verträglich sein. Der Polyphenylenether B) kann bis zu 50 Gew.-%, bevorzugt bis zu 40 Gew.-%, bezogen auf B), durch ein vinylaromatisches Polymer ersetzt sein.

Das Molekulargewicht dieser an sich bekannten Polymeren liegt im allgemeinen im Bereich von 1 500 bis 2 000 000, vorzugsweise im Bereich von 70 000 bis 1 000 000, besonders bevorzugt im Bereich von 75 000 bis 200 000.

Beispiele für bevorzugte, mit Polyphenylenethern verträgliche vinylaromatische Polymere sind der bereits erwähnten Monographie von Albisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%) können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Als Radikalstarter (b₄) seien genannt:
Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexanoat, tert.-Butylperoxydiethylacetat, tert.-Butylperoxyisobutyrat, 1,1-.Di-tert.-butylperoxy-2,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Di-tert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Methylhydroperoxid und Pinanhydroperoxid sowie hochverzweigte Alkane der allgemeinen Struktur 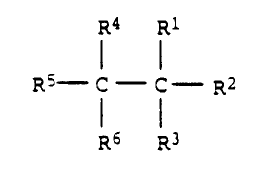 wobei R¹ bis R⁶ Alkylgruppen mit 1 bis 8 C-Atomen, Alkoxygruppen mit 1 bis 8 C-Atomen, Arylgruppen wie Phenyl, Naphthyl oder 5- oder 6-gliedrige Heterocyclen mit einem π-Elektronensystem und Stickstoff, Sauerstoff oder Schwefel als Heteroatomen darstellen. Die Substituenten R¹ bis R⁶ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Neben den wesentlichen Komponenten A) und B) können die erfindungsgemäßen Formmassen 0 bis 30, bevorzugt 5 bis 20 Gew.-%, und insbesondere 5 bis 15 Gew.-% eines kautschukelastischen Polymerisates enthalten. Es können übliche Schlagzähmodifier C) verwendet werden, die für Polyamide (Komponente A) geeignet sind und Kautschuke C), die üblicherweise Polyphenylenether B) schlagzähmodifizieren.

Als Komponente C) werden die üblichen zur Verbesserung der Zähigkeit von Polyamiden oder Polyphenylenethern eingesetzten schlagzäh modifizierenden Polymeren (auch Schlagzähmodifier, Elastomere oder Kautschuke genannt) verwendet.

Als Kautschuke, die die Zähigkeit von Polyphenylenethern erhöhen, seien z.B. folgende genannt:

Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, haben sich als besonders geeignet erwiesen.

Bevorzugt werden Blockkautschuke, bei denen mindestens ein Block, vorzugsweise ein Endblock, aus vinylaromatischen Monomeren wie Styrol, α-Methylstyrol, Vinyltoluol, Vinyl- oder Isopropenylnaphthalin aufgebaut ist. Polystyrol als vinylaromatischer Block ist besonders bevorzugt.

Üblicherweise enthalten diese bevorzugten Blockcopolymere weiterhin einen elastomeren Block, der durch eine Glastemperatur von weniger als 0°C, vorzugsweise von weniger als -30°C charakterisiert ist. Dieser Block leitet sich z.B. von konjugierten Dienen wie Butadien, Isopren, 1,3-Pentadien oder 2,3-Dimethylbutadien ab. Um Produkte mit guter Dauerwärmeformbeständigkeit zu erhalten, hat es sich als besonders geeignet erwiesen, wenn mindestens 50 %, vorzugsweise mindestens 80 % und insbesondere mindestens 90 % der Doppelbindungen hydriert werden.

Die Übergänge zwischen den einzelnen Blocken können sowohl scharf als auch verschmiert sein.

Vorzugsweise handelt es sich bei den Kautschuken, die die Zähigkeit von Polyphenylenethern erhöhen, um lineare Blockcopolymere der allgemeinen Struktur A-A, A-B-A' oder A-B-A'-B', wobei A und A' den vinylaromatischen Block, vorzugsweise Polystyrol, darstellen und B und B' den elastomeren Block, der vorzugsweise aus Butadien und/oder Isopren - wobei sowohl Butadien als auch Isopren hydriert sein können - aufgebaut ist.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Auch im Handel sind entsprechende Produkte erhältlich, z.B. ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®-G-Typen (Shell), die Finaprene®-Typen (Fina) und die Europrene®-SOL-TR-Typen (Enichem) genannt.

Kautschuke, die die Zähigkeit von Polyamiden erhöhen, weisen i.a. zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den o.g. funktionellen Gruppen gepropft wurden. Geeignete Propfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radialstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als Komponente D) können die erfindungsgemäßen Formmassen 0 bis 45, vorzugsweise von 0 bis 35 Gew.-% faser- oder teilchenförmige Füllstoffe oder deren Mischungen enthalten. Als Beispiele für Füllstoffe seien Kohlenstoff- oder Glasfasern in Form von Glasgeweben, Glasmatten oder Glasseidenrovings, Glaskugeln sowie Wollastonit genannt.

Bevorzugte faserförmige Verstärkungsstoffe (Komponente D) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) oder dem modifizierten Polyphenylenether (B) mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe (Komponente D) eignen sich amorphe Kieselsäure, Magnesiumcarbonat (Kreise), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Die erfindungsgemäßen Formmassen können weiterhin Flammschutzmittel E) in Mengen von 0 bis 20 Gew.-%, bevorzugt bis 12 Gew.-%, bezogen auf das Gesamtgewicht der Formmassen, enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Bevorzugtes Flammschutzmittel E) ist elementarer roter Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist 1,2,3,4,7,8,9,19,13,13,14,14-Dodecachloro-1,4,4a,5,6,6a,7,10,10a,11,12,12a-dodecahydro-1,4:7,10-dimethanodibenzo(a,e)-cyclooctan (Dechlorane®Plus, Occidental Chemical Corp.) und gegebenenfalls einem Synergisten z.B.Antimontrioxid.

Weitere Phosphorverbindungen sind Organophosphorverbindungen wie Phosphonate, Phosphinate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit rotem Phosphor und, wahlweise, Antimonoxid verwendet werden.

Typische bevorzugte Phosphorverbindungen sind solche der folgenden allgemeinen Formel 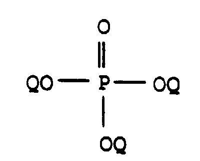 worin Q für Wasserstoff oder für gleiche oder verschiedene Kohlenwasserstoffreste oder Halogenkohlenwasserstoffreste, wie Alkyl, Cycloalkyl, Aryl, alkylsubstituiertes Aryl und arylsubstituiertes Alkyl steht, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3,5,5'-trimethylhexylphosphat), Ethyldiphenylphosphat, 2-Ethylhexyldi(p-toluyl)phosphat, Diphenylhydrogenphosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit rotem Phosphor bevorzugt.

Als Flammschutzmittel sind auch solche Verbindungen geeignet, die Phosphor-Stickstoff-Bindungen enthalten, wie Phosphonitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis(hydroxymethyl)-phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Neben den wesentlichen Komponenten A) und B) sowie gegebenenfalls C) bis E) können die erfindungsgemäßen Formmassen übliche Zusatzstoffe und Verarbeitungshilfsmittel F) enthalten. Deren Anteil beträgt im allgemeinen bis zu 30, vorzugsweise bis zu 10 Gew.-%, bezogen auf das Gesamtgewicht der Komponenten A) bis F).

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Materialien zur Erhöhung der Abschirmung gegen elektromagnetische Wellen, wie Metallflocken, -pulver, -fasern, metallbeschichtete Füllstoffe und leitfähige Polymere können mitverwendet werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen erhält man zweckmäßig durch Mischen der Einzelkomponenten bei Temperaturen von 270 bis 350°C in üblichen Mischvorrichtungen, wie Knetern, Banbury-Mischern und Einschneckenextruder, vorzugsweise jedoch mit einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen eine Reaktion zwischen den Komponenten A) bis D), insbesondere zwischen A) und B), auftreten kann, so daß im Endprodukt keine reine Mischung dieser Komponenten mehr vorliegt.

Die erfindungsgemäßen Formmassen zeichnen sich durch ihre ausgewogenen Eigenschaften, insbesondere aber durch ihre gute Abriebfestigkeit und hohe Wärmeformbeständigkeit aus.

Sie eignen sich besonders zur Herstellung von Formkörpern durch Spritzguß oder Extrusion, insbesondere für thermisch beanspruchte Teile im Automobilbereich. Im letzteren Anwendungsgebiet ist besonders von Vorteil, daß sich die aus den erfindungsgemäßen Formmassen hergestellten Teile aufgrund ihrer guten Wärmeformbeständigkeit online lackieren lassen, d.h. keine zeit- und kostenintensive getrennte Lackierung erforderlich ist.

### Beispiele

### Komponente A)

Eine ca. 60 %ige wäßrige Lösung, bestehend aus Terephthalsäure (32,2 mol-% ≙ 37,5 Gew.-%), Isophthalsäure (17,8 mol-% ≙ 20,6 Gew.-%), Hexamethylendiamin (48,1 mol-% ≙ 39,1 Gew.-% bzw. 1,9 mol-% ≙ 2,8 Gew.-%), Bis(4-aminocyclohexyl)methan und 0,174 kg Propionsäure sowie 100 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 cm². Die Verweilzeit im Verdampfer betrug 50 sec. Das aus dem Verdampfer austretende Gemisch aus Präpolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine Viskositätszahl von 48 ml/g (gemessen als 0,5 %ige Lösung bei 25°C in 96 gew.-%iger H₂SO₄ gemäß DIN 53 246).

Das Produkt wies in etwa eine Äquivalenz von Carboxyl- und Aminoendgruppen auf.

Im Austragsextruder wurde die Schmelze auf Normaldruck entspannt und bei einer Verweilzeit von weniger als 1 Minute praktisch nicht mehr weiter kondensiert.

Anschließend wurde das Produkt in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 200°C diskontinuierlich auf eine Viskositätszahl von 112 ml/g getempert. Die Verweilzeit betrug 23 h. Im Verlauf dieser Temperung wurde gegebenenfalls auch ein Großteil der extrahierbaren Restmonomere vom Wasserdampf extrahiert.

### Zusammensetzung:

a₁) 32,2 mol-% bzw. 37,5 Gew.-%
a₂) 17,8 mol-% bzw. 20,6 Gew.-%
a₃) 48,1 mol-% bzw. 39,1 Gew.-%
a₄) 1,9 mol-% bzw. 2,8 Gew.-%
Als relatives Maß für den Kristallinitätsgrad wurde die spezifische Schmelzwärme ΔH_{krist.} mittels Differential Scanning Colorimetric (DSC 990 Firma Du Pont) bei 20°C/min Aufheizrate bestimmt: 54 J/g.

### Komponente A/1V

Ein teilaromatisches Copolyamid gemäß EP-A 510 383:

| | |
|---|---|
| 5 Gew.-% Einheiten, | welche sich von Terephthalsäure und Hexamethylendiamin ableiten, |
| 10 Gew.-% Einheiten, | welche sich von ε-Caprolactam ableiten und |
| 85 Gew.-% Einheiten, | welche sich von Adipinsäure und Hexamethylendiamin ableiten. |

Die VZ betrug: 125 ml/g

### Komponente A/2V

Ein teilaromatisches Copolyamid gemäß EP-A 320 725:

| | |
|---|---|
| 70 Gew.-% Einheiten, | die sich von Terephthalsäure und Hexamethylendiamin ableiten, |
| 30 Gew.-% Einheiten, | die sich von ε-Caprolactam ableiten. |

Die VZ betrug: 118 ml/g

### Komponente A/3V

Ein aliphatisches Polyamid: Polyhexamethylenadipinsäureamid (PA66) mit einer VZ von 130 ml/g.

### Komponente B

In einem Zweischneckenextruder (ZSK 30, Werner und Pfleiderer) wurde bei einer Massetemperatur von 320°C und einer mittleren Verweilzeit von 3 min. folgende Komponenten innig vermischt:
b₁) 98,5 Gew.-% Poly(2,6-dimethyl-1,4-phenylenether) mit einer η_{red} (reduzierte Viskosität) von 0,65 (gemessen in einer 1 gew.-%igen Lösung in Chloroform bei 25°C)
b₃) 1,45 Gew.-% Fumarsäure
b₄) 0,05 Gew.-% 3,4-Dimethyl-3,4-diphenylhexan
Die Schmelze wurde entgast, als Strang extrudiert, durch ein Wasserbad geleitet, granuliert und getrocknet.

### Komponente C

Kraton® G 1701 (Styrol-hydriertes Isopren-Blockcopolymer, 28 % Polystyrol, Brookfield Viskosität 77°F, 25 gew.-%ig in Toluol = > 50.000 cps), Fa. Shell

### Herstellung der Formmassen

Die in den Tabellen angegebenen Anteile der jeweiligen Komponenten wurden in einem Zweiwellenextruder bei einer Zylindertemperatur von 325°C (bzw. 280°C für PA66 (Beispiel 7∗) und einer Drehzahl von 200 Upm vermischt. Die Schmelze wurde nach Abkühlen granuliert. Das getrocknete Granulat wurde zu Normkleinstäben verspritzt.

Die multiaxiale Zähigkeit (Durchstoßarbeit DSTA) wurde gemäß DIN 53 443 bestimmt, die Wärmeformbeständigkeit (Vicat A) gemäß DIN 53 460.

### Bestimmung der Abriebfestigkeit (x):

Die Abriebfestigkeit wurde mittels einer Stift-Scheiben-Apparatur bestimmt. Ein axial beweglicher Stift (Normkleinstab) der erfindungsgemäßen Formmassen wurde mit einem Druck von 3,14 N/mm² auf eine rotierende Stahlscheibe gepreßt. Die Gleitgeschwindigkeit betrug 0,5 m/s bei einer Gleitflächentemperatur von 35°C. Die Reibungskraft und die Abnahme der Stiftlänge wurde durch optische Meßanordnungen kontrolliert und erfaßt. Die in der Tabelle 2 abgegebene Meßgröße x entspricht dem Quotienten aus Abnahme der Stiftlänge und zurückgelegter Entfernung auf der Stahldrehscheibe.

Die Zusammensetzungen der Formmassen und die Ergebnisse der Messungen sind den Tabellen zu entnehmen.

**Tabelle 1:**

| Zusammensetzungen der erfindungsgemäßen Beispiele und Vergleichsversuche | | | |
|---|---|---|---|
| Beispiele | Komponente A [Gew.-%] | Komponente B [Gew.-%] | Komponente C [Gew.-%] |
| 1 | 60 A | 40 | - |
| 2 | 60 A | 35 | 5 |
| 3 | 50 A | 45 | 5 |
| 4 | 50 A | 40 | 10 |
| 5 *) | 50 A/1V | 40 | 10 |
| 6 *) | 50 A/2V | 40 | 10 |
| 7 *) | 50 A/3V | 40 | 10 |

| | | | |
|---|---|---|---|
| *) zum Vergleich | | | |

**Tabelle 2:**

| Eigenschaften | | | |
|---|---|---|---|
| Beispiele | Vicat A [°C] | DSTA [Nm] | x [µm/km] |
| 1 | 270 | 62 | 4 |
| 2 | 266 | 73 | 7 |
| 3 | 262 | 74 | 3 |
| 4 | 257 | 81 | 5 |
| 5 *) | 176 | 65 | 15 |
| 6 *) | 259 | 48 | 16 |
| 7 *) | 188 | 52 | 29 |

| | | | |
|---|---|---|---|
| *) zum Vergleich | | | |

## Patentansprüche

1. Thermoplastische Formmassen, enthaltend
A) 5 bis 95 Gew.-% eines teilaromatischen, teilkristallinen Copolyamids, aufgebaut im wesentlichen aus
a₁) 32 bis 40 mol-% Einheiten, welche sich von Terephthalsäure ableiten
a₂) 10 bis 18 mol-% Einheiten, welche sich von Isophthalsäure ableiten
a₃) 43 bis 49,5 mol-% Einheiten, welche sich von Hexamethylendiamin ableiten
a₄) 0,5 bis 7 mol-% Einheiten, welche sich von aliphatischen cyclischen Diaminen mit 6 bis 30 C-Atomen ableiten,
wobei die Molprozente der Komponenten a₁) bis a₄) zusammen 100 % ergeben und
B) 5 bis 95 Gew.-% eines Polyphenylenethers
C) 0 bis 30 Gew.-% eines kautschukelastischen Polymerisates
D) 0 bis 45 Gew.-% eines faser- oder teilchenförmigen Füllstoffes oder deren Mischungen
E) 0 bis 20 Gew.-% eines Flammschutzmittels
F) 0 bis 30 Gew.-% Stabilisatoren, Oxidationsinhibitoren, Mittel gegen Wärmezersetzung und Zersetzung durch ultraviolettes Licht, Gleitmittel, Entformungsmittel, Farbstoffe, Pigmente oder Weichmacher,
wobei sich die Prozentzahlen A) bis F) zu 100 % ergänzen.

2. Thermoplastische Formmassen nach Anspruch 1, in denen
A) 15 bis 75 Gew.-%
B) 20 bis 80 Gew.-%
C) 5 bis 20 Gew.-%
D) 0 bis 35 Gew.-%
E) 0 bis 12 Gew.-%
F) 0 bis 30 Gew.-%
beträgt.

3. Thermoplastische Formmassen nach den Ansprüchen 1 und 2, in denen das Copolyamid A) aufgebaut ist aus
a₁) 32 bis 40 mol-%
a₂) 10 bis 18 mol-%
a₃) 46 bis 48,5 mol-%
a₄) 1,5 bis 4 mol-%

4. Thermoplastische Formmassen nach den Ansprüchen 1 bis 3, in denen das Copolyamid A) einen Triamingehalt von weniger als 0,5 Gew.-% aufweist.

5. Thermoplastische Formmassen nach den Ansprüchen 1 bis 4, in denen der Polyphenylenether B) bis zu 50 Gew.-%, bezogen auf B), durch ein vinylaromatisches Polymer ersetzt sein kann.

6. Thermoplastische Formmassen nach den Ansprüchen 1 bis 5, in denen als Komponente B) ein modifizierter Polyphenylenether eingesetzt wird, der durch Umsetzen von
b₁) 50 bis 99,95 Gew.-% eines unmodifizierten Polyphenylenethers
b₂) 0 bis 40 Gew.-% eines vinylaromatischen Polymeren
b₃) 0,05 bis 30 Gew.-% mindestens einer Verbindung aus der Gruppe gebildet aus
b₃₁) einer α,β-ungesättigten Dicarbonylverbindung,
b₃₂) eines Amid-Gruppen enthaltenden Monomeren mit einer polymerisierbaren Doppelbindung und
b₃₃) eines Lactam-Gruppen enthaltenden Monomeren mit einer polymerisierbaren Doppelbindung,
b₄) 0 bis 5 Gew.-% eines Radikalstarters wobei sich die Gewichtsprozente auf die Summe von b₁) bis b₄) beziehen, erhältlich ist.

7. Thermoplastische Formmassen nach Anspruch 6, in denen die Komponente b₃) Maleinsäure, Fumarsäure oder Maleinsäureanhydrid ist.

8. Verwendung der thermoplastischen Formmassen gemäß den Ansprüchen 1 bis 7 zur Herstellung von Fasern, Folien und Formkörpern.

9. Formkörper, erhältlich aus Formmassen gemäß den Ansprüchen 1 bis 7.

## Claims

1. A thermoplastic molding material containing
A) from 5 to 95% by weight of a partly aromatic, semicrystalline copolyamide composed essentially of
a₁) from 32 to 40 mol% of units which are derived from terephthalic acid
a₂) from 10 to 18 mol% of units which are derived from isophthalic acid
a₃) from 43 to 49.5 mol% of units which are derived from hexamethylenediamine and
a₄) from 0.5 to 7 mol% of units which are derived from aliphatic cyclic diamines of 6 to 30 carbon atoms,
the molar percentages of components a₁) to a₄) together being 100%, and
B) from 5 to 95% by weight of a polyphenylene ether
C) from 0 to 30% by weight of an elastomeric polymer,
D) from 0 to 45% by weight of a fibrous or particulate filler or of a mixture thereof,
E) from 0 to 20% by weight of a flameproofing agent and
F) from 0 to 30% by weight of stabilizers, antioxidants, heat stabilizers and UV stabilizers, lubricants, mold release agents, dyes, pigments or plasticizers,
the percentages A) to F) summing to 100%.

2. A thermoplastic molding material as claimed in claim 1, wherein
A) is from 15 to 75% by weight,
B) is from 20 to 80% by weight,
C) is from 5 to 20% by weight,
D) is from 0 to 35% by weight,
E) is from 0 to 12% by weight and
F) is from 0 to 30% by weight.

3. A thermoplastic molding material as claimed in claim 1 or 2, wherein the copolyamide A) is composed of
from 32 to 40 mol% of a₁),
from 10 to 18 mol% of a₂),
from 46 to 48.5 mol% of a₃) and
from 1.5 to 4 mol% of a₄).

4. A thermoplastic molding material as claimed in any of claims 1 to 3, wherein the copolyamide A) has a triamine content of less than 0.5% by weight.

5. A thermoplastic molding material as claimed in any of claims 1 to 4, wherein up to 50% by weight, based on B), of the polyphe-nylene ether B) may be replaced by a vinylaromatic polymer.

6. A thermoplastic molding material as claimed in any of claims 1 to 5, wherein a modified polyphenylene ether which is obtainable by reacting
b₁) from 50 to 99.95% by weight of an unmodified polyphenylene ether,
b₂) from 0 to 40% by weight of a vinylaromatic polymer,
b₃) from 0.05 to 30% by weight of at least one compound selected from the group consisting of
b₃₁) an α,β-unsaturated dicarbonyl compound,
b₃₂) an amido-containing monomer having a polymerizable double bond and
b₃₃) a lactam-containing monomer having a polymerizable double bond,
b₄) from 0 to 5% by weight of a free radical initiator,
the percentages by weight being based on the sum of b₁) to b₄),
is used as component B).

7. A thermoplastic molding material as claimed in claim 6, wherein the component b₃) is maleic acid, fumaric acid or maleic anhydride.

8. The use of a thermoplastic molding material as claimed in any of claims 1 to 7 for the production of fibers, films and moldings.

9. A molding obtainable from a molding material as claimed in any of claims 1 to 7.

## Revendications

1. Masses à mouler thermoplastiques, qui contiennent
A) 50 à 95% en poids d'un copolymère partiellement aromatique, partiellement cristallin, constitué, pour l'essentiel, de
a₁) 32 à 40% molaires d'unités qui dérivent de l'acide téréphtalique,
a₂) 10 à 18% molaires d'unités qui dérivent de l'acide isophtalique,
a₃) 43 à 49,5% molaires d'unités qui dérivent de l'hexaméthylènediamine,
a₄) 0,5 à 7% molaires d'unités qui dérivent de diamines cycliques aliphatiques qui comportent de 6 à 30 atomes de carbone,
où les pourcentages molaires des composants a₁) à a₄) totalisent 100% et
B) 5 à 95% en poids d'un polyphénylèneéther,
C) 0 à 30% en poids d'un polymère présentant l'élasticité du caoutchouc,
D) 0 à 45% en poids d'une charge fibreuse ou particulaire, ou de leurs mélanges,
E) 0 à 20% en poids d'un agent ignifugeant,
F) 0 à 30% en poids de stabilisateurs, d'inhibiteurs d'oxydation, d'agents contre la décomposition thermique et contre la décomposition par la lumière ultraviolette, d'agents lubrifiants, d'agents de démoulage, de colorants, de pigments, ou de plastifiants,
où les pourcentages pondéraux A) à F) totalisent 100%.

2. Masses à mouler thermoplastiques suivant la revendication 1, dans lesquelles
A) varie de 15 à 75% en poids
B) varie de 20 à 80% en poids
C) varie de 5 à 20% en poids
D) varie de 0 à 35% en poids
E) varie de 0 à 12% en poids
F) varie de 0 à 30% en poids.

3. Masses à mouler thermoplastiques suivant les revendications 1 et 2, dans lesquelles le copolyamide A) est constitué de
a₁) 32 à 40% molaires
a₂) 10 à 18% molaires
a₃) 46 à 48,5% molaires
a₄) 1,5 à 4% molaires.

4. Masses à mouler thermoplastiques suivant les revendications 1 à 3, dans lesquelles le copolyamide A) présente une teneur en triamine inférieure à 0,5% en poids.

5. Masses à mouler thermoplastiques suivant les revendications 1 à 4, dans lesquelles le polyphénylèneéther B) peut être remplacé par jusqu'à 50% en poids, par rapport à B), par un polymère vinylaromatique.

6. Masses à mouler thermoplastiques suivant les revendications 1 à 5 dans lesquelles, on met en oeuvre, à titre de composant B), un polyphénylèneéther modifié qui est obtenu par la réaction de
b₁) 50 à 99,95% en poids d'un polyphénylèneéther non modifié,
b₂) 0 à 40% en poids d'un polymère vinylaromatique,
b₃) 0,05 à 30% en poids d'au moins un composé choisi dans le groupe formé par
b₃₁) un composé dicarbonylé α,β-insaturé,
b₃₂) un monomère contenant des radicaux amide avec une double liaison polymérisable et
b₃₃) un monomère contenant des radicaux lactame avec une double liaison polymérisable,
b₄) 0 à 50% en poids d'un amorceur radicalaire,
où les pourcentages pondéraux se rapportent à la somme de b₁) à b₄).

7. Masses à mouler thermoplastiques suivant la revendication 6, dans lesquelles le composant b₃) est l'acide maléique, l'acide fumarique, ou l'anhydride de l'acide maléique.

8. Utilisation des masses à mouler thermoplastiques suivant les revendications 1 à 7 pour la fabrication de fibres, de feuilles et d'articles moulés.

9. Articles moulés que l'on peut obtenir à partir des masses à mouler suivant les revendications 1 à 7.
